# EUROPEAN PATENT SPECIFICATION

(11) **EP 1 707 883 B1**
(45) Date of publication and mention of the grant of the patent: **24.10.2018**
(21) Application number: 04820682.5
(22) Date of filing: 08.12.2004
(51) Int. Cl.: F23Q 7/00, H05B 3/14

(54) **CERAMIC HEATER-TYPE GLOW PLUG**
KERAMISCHE GLÜHKERZE
BOUGIE À INCANDESCENCE EN CÉRAMIQUE

(30) Priority: 19.12.2003 JP 2003422811
(43) Date of publication of application: 04.10.2006
(73) Proprietor: Bosch Corporation, Tokyo 150-8360 (JP)
(72) Inventor: TANAKA, Arihito, BOSCH CORPORATION, Saitama 355-8603 (JP); ZHAO, Jian, BOSCH CORPORATION, Saitama 355-8603 (JP)
(74) Representative: Hoffmann Eitle
(86) International application number: PCT/JP2004/018288
(87) International publication number: WO 2005/061963

(56) References cited:
- EP-A1- 1 328 138
- JP-A- 11 237 045
- JP-A- 58 112 862
- JP-A- 60 000 217
- JP-A- S60 216 126
- JP-A- 2000 121 055
- JP-A- 2000 356 343
- US-A- 4 499 366
- US-A- 6 130 410

## Description

### Technical Field

The present invention relates to a ceramic heater-type glow plug which is used for assisting the start-up of a diesel engine, and more particularly to a ceramic heater-type glow plug which seals an insulating material such as magnesium oxide as a sealing material in the inside of a metal outer sleeve which holds a ceramic heater.

### Background Art

A ceramic heater-type glow plug which is used for assisting the start-up of a diesel engine is, in general, configured as follows. A rear portion side of a ceramic heater is held inside a metallic outer sleeve in a state that a heat generating portion formed on a distal end of the ceramic heater projects to the outside of the metallic outer sleeve. A rear end of the metallic outer sleeve is inserted and fixed in the inside of a front end portion of a cylindrical housing which is a fitting for mounting the plug on a cylinder head of an engine. One electrode (negative electrode) of the ceramic heater is taken out to an outer surface of a heater body and is electrically connected to an inner surface of the metallic outer sleeve and, at the same time, the other electrode (positive electrode) is taken out to the outside from a rear end side of the heater body by way of an electrode lead-out fitting and is electrically connected to an external connection terminal which is fixed to the rear end portion of the housing by way of an insulating member.

In the above-mentioned ceramic heater-type glow plug, there has been proposed a technique which grinds a rear end portion of a ceramic heater thus forming a small-diameter portion for connecting a positive electrode side of the ceramic heater and an electrode lead-out fitting (see JP 10-332149 (page 4 to 5, Fig. 1), for example).

Recently, to satisfy the restriction of an exhaust gas emission, a combustion system of a diesel engine has been shifted from a type which includes a sub combustion chamber to a directly injecting type, that is, a direct injection type and, further, the development of a multi-valve formation has been in progress. A glow plug used in such a direct-injection-type diesel engine faces a main combustion chamber through a wall surface of a cylinder head and hence, it is necessary to elongate a total length of the plug and also to reduce a diameter thereof compared to a glow plug which preheats the sub combustion chamber.

Further, it is necessary to increase a thickness of the cylinder head to ensure strength of the cylinder head and hence, an insertion hole for mounting the glow plug is required to be extremely fine and elongated whereby it is necessary to make the glow plug extremely elongated correspondingly.

To satisfy the above-mentioned requirement on the elongation of the glow plug and also to realize the reduction of cost by shortening a total length of the ceramic heater, there has been already known a glow plug having the structure in which a ceramic heater is fixed to one end side of a metallic outer sleeve in a state that a distal-end heat generating portion of the ceramic heater in which a heat generating material is embedded projects to the outside the metallic outer sleeve and, at the same time, a rear end side of the ceramic heater to which an electrode lead-out fitting is connected is positioned inside the metallic outer sleeve.

In the glow plug which is configured such that a positive electrode which is exposed on a rear end portion of the ceramic heater and the electrode lead-out fitting are connected with each other in the inside of the metallic outer sleeve, a heat-resistant insulating powder made of magnesium oxide (MgO) or the like is sealed in the inside of the metallic outer sleeve, and the heat-resistant insulating powder is brought into a highly dense state by swaging or the like, thus firmly fixing the electrode lead-out fitting.

In such a constitution which connects the positive electrode of the ceramic heater and the electrode lead-out fitting in the inside of the metallic outer sleeve, it is necessary to further reduce a diameter of the rear end portion of the ceramic heater and hence, breaking of the rear end portion must be sufficiently taken into consideration.

Furthermore, EP 1 328 138 A1 discloses a ceramics heater, which includes a heating element which is carried by an insulating ceramics material.
Further prior art can be found in JP S60 216126 A, which describes a two-wire type ceramic glow plug, and in US 6 130 410 A, which describes a ceramic heater and a process for producing the same. Task to be solved by the Invention

However, heat-resistant insulating powder made of magnesium oxide or the like which is filled in the inside of the metallic outer sleeve is a polycrystalline material having a relatively high rigidity and hence, when the deformation or the like of the metallic outer sleeve is generated, a force acts on the small-diameter portion of the ceramic heater by way of this magnesium oxide thus giving rise to a possibility that the small diameter portion is broken.

The present invention has been made to overcome the above-mentioned drawback and it is an object of the present invention to provide a ceramic heater-type glow plug which can eliminate the possibility of breaking of a ceramic heater even when a bending stress acts on a distal end side of the ceramic heater or a metallic outer sleeve is deformed.

The present invention is directed to a ceramic heater-type glow plug which includes a ceramic heater, a metallic outer sleeve one end portion of which holds the ceramic heater and another end portion of which is fixed in an inner hole of a housing, an electrode lead-out member which is connected to one electrode of the ceramic heater in the inside of the metallic outer sleeve, and an insulating material which is filled in the metallic outer sleeve as a sealing material, wherein a granulated powder made of an inorganic insulating material is filled around a connecting portion of the ceramic heater and the electrode lead-out member.

Further, the invention described in claim 2 is characterized in that a small-diameter portion is formed on an end portion of the ceramic heater which is positioned inside the metallic outer sleeve, and the electrode of the ceramic heater and the electrode lead-out member are connected to each other on the small-diameter portion.

Further, the invention described in claim 3 is characterized in that the granulated powder is formed of a granulated material made of fine powder with primary particles having a particle size of 5µm or less.

Further, the invention described in claim 4 is characterized in that a particle size of the granulated material is a value which falls within a range from 30 to 200µm.

Further, the invention described in claim 5 is characterized in that the insulating material filled in the inside of the metallic outer sleeve is heat-resistant insulating powder which is brought into a highly dense state by swaging after being filled.

### Advantageous effect of Invention

The ceramic heater-type glow plug of the present invention provides an advantageous effect to eliminate the possibility of breaking of a rear-end-portion side of a ceramic heater which is positioned inside the metallic outer sleeve even when a bending stress acts on a distal end portion of the ceramic heater or the metallic outer sleeve is deformed.

### Brief Explanation of the Drawings

Fig. 1 is a longitudinal cross-sectional view of a ceramic heater-type glow plug (embodiment 1).
Fig. 2 is a longitudinal cross-sectional view showing an essential part of the ceramic heater-type glow plug in an enlarged manner.

### Explanation of symbols

4: ceramic heater
4b: small-diameter portion of ceramic heater
8: metallic outer sleeve
10: electrode lead-out wire (electrode lead-out member)
12: electrode lead-out rod
16: housing
16b: inner hole of housing
18: granulated powder
20: insulating material

### Best Mode for Carrying Out the Invention

With the simple constitution that granulated powder made of an inorganic insulating material is filled around a connecting portion of a rear-end-portion side of a ceramic heater which is positioned inside a metallic outer sleeve and an electrode lead-out member, it is possible to achieve an object of the present invention that the breaking of the ceramic heater can be prevented.

### Embodiment 1

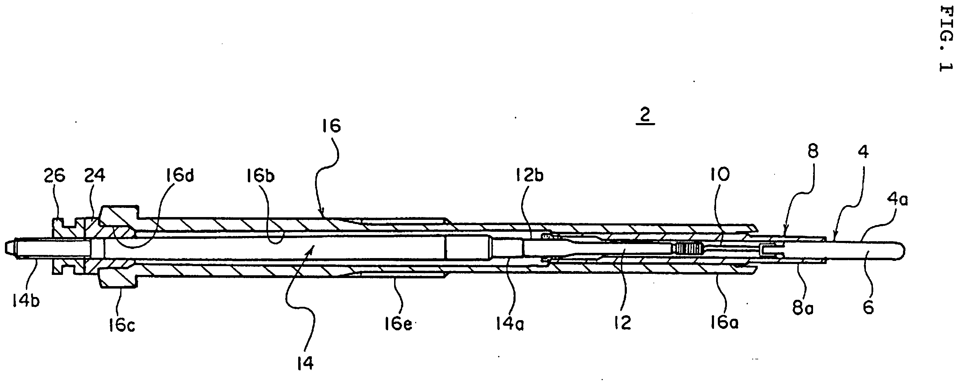

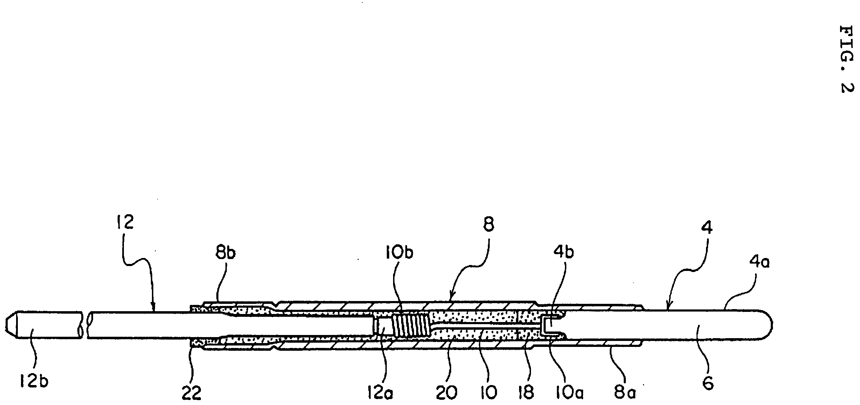

Hereinafter, the present invention is explained in conjunction with an embodiment shown in drawings. Fig. 1 is a longitudinal cross-sectional view of a glow plug for diesel engine (the whole constitution being indicated by symbol 2) according to one embodiment of the present invention, and Fig. 2 is an enlarged view of an essential part of the ceramic heater-type glow plug. The glow plug 2 of this embodiment is a ceramic heater-type glow plug which includes a ceramic heater 4.

In the ceramic heater 4, a heat generating material not shown in the drawing is embedded in a ceramic insulating material 6 which constitutes a body portion of the ceramic heater 4. A negative electrode side of the heat generating material is taken out to an outer peripheral surface of the ceramic insulating material 6, and is electrically connected to an inner surface of a sheath (metallic outer sleeve) 8 explained later by bonding with blazing or the like. On the other hand, a positive electrode side of the heat generating material extends to an end portion (a rear end portion which is positioned at a left end in Fig. 1 and Fig. 2) opposite to a distal end portion 4a where the heat generating material of the ceramic heater 4 is embedded, and is exposed on an outer surface of a small diameter portion 4b which is formed on the rear end portion by grinding or the like. To the rear-end small-diameter portion 4b of the ceramic heater 4, a cup-shaped portion 10a which is formed on a distal end of an electrode lead-out wire 10 which constitutes an electrode lead-out member is fitted and is electrically connected with the positive electrode side of the heat generating material which is exposed on the outer surface of the small-diameter portion 4b of the ceramic heater 4.

A rear end portion 10b of the electrode lead-out wire 10 is formed in a coil shape, and a distal end portion 12a of an electrode lead-out rod 12 which is made of a rigid conductive metal body is inserted into the coil portion 10b to be electrically connected to each other. Further, a rear end portion 12b of the electrode lead-out rod 12 is fixed to a distal end portion 14a of an external contact terminal 14 by butt welding or the like. Here, in this embodiment, the electrode (positive electrode) is taken out to the outside using the electrode lead-out wire 10 and the electrode lead-out rod 12. However, the electrode take-out structure is not limited to such a constitution and may adopt the constitution which connects the positive electrode of the ceramic heater 4 and the external connecting terminal 14 using one wire.

The ceramic heater 4 having the above-mentioned constitution is bonded to the inside of the metallic outer sleeve 8 by blazing or the like, and the ceramic heater 4 is fixed to a cylindrical housing 16 which constitutes a mounting fitting for a cylinder head of an engine (not shown in the drawing) by way of the metallic outer sleeve 8.

The electrode lead-out wire 10 and the electrode lead-out rod 12 which are electrically connected to the positive electrode side of the heat generating material of the ceramic heater 4 are fixed to the metallic outer sleeve 8 by swaging or the like. The fixing step of these parts by swaging is explained. First of all, the rear-end-side of ceramic heater 4 on which the small diameter portion 4b is formed is inserted into the inside of a distal end portion 8a of the metallic outer sleeve 8 and is fixed by blazing or the like while the cup portion 10a which is formed on the distal end of the electrode lead-out wire 10 is fitted on and around the small-diameter portion 4b of the ceramic heater 4 which is positioned in the inside of the distal end portion 8a of the metallic outer sleeve 8. Further, the distal end 12a of the electrode lead-out rod 12 is inserted into the coil-shaped portion 10b which is formed on the rear end portion of the electrode lead-out wire 10.

As described above, the ceramic heater 2 is fixed to the metallic outer sleeve 12 at the position close to the distal end portion 8a thereof, and the electrode lead-out wire 10 and the electrode lead-out rod 12 are connected to each other in the inside of the metallic outer sleeve 8. Thereafter, first of all, a granulated powder made of an inorganic insulating material (see a portion indicated by 18 in Fig. 2) is filled from an opening portion 8b formed in the rear portion side of the metallic outer sleeve 8. The granulated material 18 is constituted of fine powder containing primary particles of 5µm or less, wherein a particle size of the fine powder is preferably set to a value which falls within a range from 30 to 200µm. Further, the granulated powder 18 only has to be of a material which exhibits heat resistance up to approximately 500°C and exhibits excellent insulating property. For example, magnesium oxide, zirconium oxide, aluminum nitride, silicon nitride or the like may be used. In this embodiment, the granulated material made of alumina is used in view of the insulating property and the easy availability thereof.

In the inside of the metallic outer sleeve 8, around the small-diameter portion 4b of the ceramic heater 4, that is, around the connecting portion between the small diameter portion 4b and the cup portion 10a of the electrode lead-out wire 10, the granulated powder 18 made of the inorganic insulating material is filled. Thereafter, in the remaining space of the inside of the metallic outer sleeve 8, in which the connecting portion of the electrode lead-out wire 10 and the electrode lead-out rod 12 is accommodated a heat-resistant insulating powder (for example, magnesium oxide (MgO)) or the like 20 is filled. Next, a sealing member 22 made of rubber (for example, silicon rubber, fluoro rubber or the like) is inserted into the opening portion 8b of the metallic outer sleeve 8. By inserting this sealing member 22 into the inside of the opening portion 8b of the metallic outer sleeve 8, it is possible to prevent spilling of the heat-resistant insulating powder 20 when swaging is carried out in the subsequent steps. Further, it is also possible to prevent the electrode lead-out rod 12 from coming into contact with the metallic outer sleeve 8.

Thereafter, by applying swaging to the rear portion side of the metallic outer sleeve 8 in which the connecting portion between the electrode lead-out wire 10 and the electrode lead-out rod 12 is accommodated, the outer diameter of the rear portion side of the metallic outer sleeve 8 is reduced. By performing such swaging, the heat-resistant insulating powder 20 is brought into a highly dense state thus fixing the electrode lead-out wire 10 and the electrode lead-out rod 12 in the inside of the metallic outer sleeve 8.

To the rear end portion 12b of the electrode lead-out rod 12 which is fixed to the metallic outer sleeve 8 by swaging in the above-mentioned manner, the distal end 14a of the external connecting terminal 14 is fixed by butt welding or the like. Then, into the inside of an inner hole 16b, an integral assembly of the ceramic heater 4, the metallic outer sleeve 8, the electrode lead-out wire 10, the electrode lead-out rod 12 and the external contact terminal 14 is inserted from the distal end portion 16a of the housing 16 in a state that the threaded portion 14b side at the rear end of the external connecting terminal 14 comes first. The assembly is inserted into the inside of the housing 16 and is press-fitted into the inner hole 16b of the housing 16 from the rear portion side of the metallic outer sleeve 8 thus fixing the metallic outer sleeve 8 in the housing 16. Here, the means for fixing the metallic outer sleeve 8 in the housing 16 is not limited to the press fitting and the metallic outer sleeve 8 may be fixed in the housing 16 by other means.

When the assembly of the ceramic heater 4, the metallic outer sleeve 8, the electrode lead-out wire 10, the electrode lead-out rod 12 and the external contact terminal 16 is inserted and fixed in the housing 16, a threaded portion 14b for battery connection which is formed on a rear end of the external connecting terminal 14 projects from a rear end portion 16c of the housing 16. An insulating bushing 24 is fitted on the threaded portion 14b from outside thereof and is inserted into the inside of a large-diameter hole 16d formed in the rear end of the housing 16 and, thereafter, a nut 26 made of aluminum is threadedly engaged with the threaded portion 14b from the outside thus fixing the external connecting terminal 14 to the housing 16. Here, a threaded portion 16e for mounting on a cylinder head of an engine not shown in the drawing is formed on a substantially middle portion of the outer surface of the housing 16, while a hexagonal nut portion for fastening the threaded portion 16e is formed on the outer surface of the rear end portion 16c of the housing 16.

As described above, conventionally, in the whole inside of the metallic outer sleeve in which the rear end portion of the ceramic heater and the electrode lead-out fitting are connected, the heat-resistant insulating powder made of magnesium oxide or the like is filled and, thereafter, brought into a highly dense state by swaging thus fixing the electrode lead-out fitting in the metallic outer sleeve. However, according to this embodiment, around the connecting portion of the small-diameter portion 4a formed on the rear end portion of the ceramic heater 4 and the electrode lead-out wire 10 which corresponds to the electrode lead-out fitting, the granulated powder material 18 made of an inorganic insulating material is filled. The granulated material 18 contains fine powder which includes the primary particles of 5 µm or less and has the granulated particle size which falls within a range from 30 to 200 µm. Therefore, the rigidity of the granulated material 18 is extremely low and hence, even when a bending stress is applied to the distal end of the ceramic heater 4 or the metallic outer sleeve 8 is deformed, it is possible to prevent the rupture of the small-diameter portion 4b formed on the rear end portion of the ceramic heater 4.

## Claims

1. A ceramic heater-type glow plug comprising:
a ceramic heater (4);,
a metallic outer sleeve (8) one end portion of which holds the ceramic heater (4) and the other end portion of which is fixed in an inner hole (16b) of a housing (16);
an electrode lead-out member (10) which is connected to one electrode of the ceramic heater (4) in the inside of the metallic outer sleeve (8); and
an insulating material (20) having a high rigidity which is filled in the metallic outer sleeve (8) as a sealing material and fixes the electrode lead-out member (10) in the metallic outer sleeve (8), **characterized in that**
a granulated powder (18) made of an inorganic insulating material having a low rigidity is filled around a connecting portion of the ceramic heater (4) and the electrode lead-out member (10).

2. A ceramic heater-type glow plug according to claim 1, wherein a small-diameter portion (4b) is formed on an end portion of the ceramic heater (4) which is positioned inside the metallic outer sleeve (8), and the electrode of the ceramic heater (4) and the electrode lead-out member (10) are connected to each other on the small-diameter portion (4b).

3. A ceramic heater-type glow plug according to claim 1 or claim 2, wherein the granulated powder (18) is formed of a granulated material made of fine powder with primary particles having a particle size of 5 µm or less.

4. A ceramic heater-type glow plug according to any one of claims 1 to 3, wherein a particle size of the granulated material is from 30 to 200 µm.

5. A ceramic heater-type glow plug according to claim 1, wherein the insulating material (20) filled in the inside of the metallic outer sleeve (8) is a heat-resistant insulating powder which is brought into a highly dense state by swaging after being filled.

## Patentansprüche

1. Keramische Heizstabtyp-Glühkerze, umfassend:
einen keramischen Heizstab (4);
eine metallische Außenhülse (8) von der ein Endabschnitt den keramischen Heizstab (4) enthält, und deren anderer Endabschnitt in einem inneren Loch (16b) eines Gehäuses (16) befestigt ist;
ein Elektrodenausführelement (10), das an eine Elektrode des keramischen Heizstabs (4) im Inneren der metallischen Außenhülse (8) angeschlossen ist; und
ein Isoliermaterial (20), das eine hohe Starrheit aufweist und in die metallische Hülse (8) als Dichtmaterial eingefüllt ist und das Elektrodenausführelement (10) in der metallischen Außenhülse (8) befestigt,
**dadurch gekennzeichnet, dass** ein gekörntes Pulver (18) aus einem anorganischen Isoliermaterial, das ein niedrigen Starrheit aufweist, um den Anschlussabschnitt des keramischen Heizstabs (4) und das Elektrodenausführelement (10) herum eingefüllt ist.

2. Keramische Heizstabtyp-Glühkerze nach Anspruch 1, wobei ein Abschnitt mit kleinem Durchmesser (4b) an einem Endabschnitt des keramischen Heizstabs (4) ausgebildet ist, der im Inneren der metallischen Außenhülse (8) positioniert ist, und die Elektrode des keramischen Heizstabs (4) und das Elektrodenausführelement (10) auf dem Abschnitt mit kleinem Durchmesser (4b) aneinander angeschlossen sind.

3. Heizstabtyp-Glühkerze nach Anspruch 1 oder Anspruch 2, wobei das körnige Pulver (18) aus einem körnigen Material gebildet ist, das aus feinem Pulver besteht, dessen primäre Partikel eine Partikelgröße von 5 µm oder darunter aufweisen.

4. Keramische Heizstabtyp-Glühkerze nach einem der Ansprüche 1 bis 3, wobei eine Partikelgröße des gekörnten Materials von 30 bis 200 µm beträgt.

5. Keramische Heizstabtyp-Glühkerze nach Anspruch 1, wobei das in das Innere der metallischen Außenhülse (8) gefüllte Isoliermaterial (20) ein wärmebeständiges Isolierpulver ist, das durch Verpressung nach seinem Einfüllen in einen hochdichten Zustand gebracht wird.

## Revendications

1. Bougie à incandescence de type élément chauffant en céramique comprenant :
un élément chauffant en céramique (4) ;
un manchon extérieur métallique (8) dont une portion d'extrémité maintient l'élément chauffant en céramique (4) et dont l'autre portion d'extrémité est fixée dans un trou intérieur (16b) d'un boîtier (16) ;
un élément de sortie d'électrode (10) qui est relié à une électrode de l'élément chauffant en céramique (4) à l'intérieur du manchon extérieur métallique (8) ; et
un matériau isolant (20) ayant une rigidité élevée qui est introduit dans le manchon extérieur métallique (8) en tant que matériau d'étanchéité et fixe l'élément de sortie d'électrode (10) dans le manchon extérieur métallique (8), **caractérisée en ce que**
une poudre granulée (18) faite d'un matériau isolant inorganique ayant une faible rigidité est introduite autour d'une portion de liaison de l'élément chauffant en céramique (4) et de l'élément de sortie d'électrode (10).

2. Bougie à incandescence de type élément chauffant céramique en selon la revendication 1, dans laquelle une portion de petit diamètre (4b) est formée sur une portion d'extrémité de l'élément chauffant en céramique (4) qui est positionnée à l'intérieur du manchon extérieur métallique (8), et l'électrode de l'élément chauffant en céramique (4) et l'élément de sortie d'électrode (10) sont reliés l'un à l'autre sur la portion de petit diamètre (4b).

3. Bougie à incandescence de type élément chauffant en céramique selon la revendication 1 ou 2, dans laquelle la poudre granulée (18) est formée d'un matériau granulé fait de poudre fine avec des particules primaires ayant une taille de particules de 5 µm ou moins.

4. Bougie à incandescence de type élément chauffant en céramique selon l'une quelconque des revendications 1 à 3, dans laquelle une taille de particules du matériau granulé est de 30 à 200 µm.

5. Bougie à incandescence de type élément chauffant en céramique selon la revendication 1, dans laquelle le matériau isolant (20) introduit à l'intérieur du manchon extérieur métallique (8) est une poudre isolante résistante à la chaleur qui est amenée dans un état très dense par écrasement après son introduction.
